# FASCICULE DE BREVET EUROPEEN

(11) **EP 2 084 893 B1**
(45) Date de publication et mention de la délivrance du brevet: **19.10.2011**
(21) Numéro de dépôt: 07823414.3
(22) Date de dépôt: 10.08.2007
(51) Int. Cl.: H04M 9/08

(54) **CIRCUIT DE RÉDUCTION DE L'ÉCHO ACOUSTIQUE POUR UN DISPOSITIF "MAINS LIBRES" UTILISABLE AVEC UN TÉLÉPHONE PORTABLE**
SCHALTUNGSANORDNUNG ZUR UNTERDRÜCKUNG AKUSTISCHER ECHOS BEI EINER FREISPRECHEINRICHTUNG VERWENDBAR MIT EINEM TRAGBAREN TELEFON
CIRCUIT FOR REDUCING THE ACOUSTIC ECHO FOR A HANDS-FREE DEVICE USABLE WITH A PORTABLE TELEPHONE

(30) Priorité: 26.10.2006 FR 0609396
(43) Date de publication de la demande: 05.08.2009
(73) Titulaire: Parrot, 75010 Paris (FR)
(72) Inventeur: SEYDOUX, Henri, 75017 Paris (FR)
(74) Mandataire: Dupuis-Latour, Dominique
(86) Numéro de dépôt international: PCT/FR2007/001362
(87) Numéro de publication internationale: WO 2008/049983

(56) Documents cités:
- WO-A-96/26592
- JP-A- 2 209 027
- JP-A- 60 102 052

## Description

L'invention concerne de façon générale la réduction d'écho dans les dispositifs utilisant des signaux audio captés par un microphone, par exemple les téléphones, adaptateurs de type "mains-libres" et dispositifs analogues.

En particulier, l'invention peut être avantageusement appliquée à un dispositif "mains libres" utilisable en association avec un téléphone portable, notamment un dispositif "mains libres" autonome adaptable de manière amovible dans un véhicule automobile.

Plus précisément, l'écho peut résulter de deux phénomènes, de natures différentes. Le premier est l'écho dit "écho de ligne", cantonné à la voie de transmission et pour lequel on connaît diverses méthodes de filtrage ; le second est dit "écho acoustique", écho réellement capté par le microphone et dû au phénomène de réverbération de l'environnement du locuteur, typiquement la pièce où il se trouve ou bien l'habitacle d'un véhicule. C'est à l'élimination de ce dernier type d'écho (écho acoustique) que s'attache tout particulièrement la présente invention.

Cet écho acoustique constitue un élément perturbateur majeur du dispositif pouvant aller, souvent, jusqu'à rendre incompréhensible pour le locuteur distant (celui qui est à l'autre bout de la voie de transmission du signal téléphonique) les paroles du locuteur proche (celui dont les paroles sont noyées dans l'écho acoustique.

Ces appareils comportent un microphone sensible destiné à capter la parole du locuteur proche, et un haut-parleur relativement puissant reproduisant la parole du locuteur distant au cours d'une conversation téléphonique. Toutefois, par couplage acoustique entre ces deux transducteurs, le microphone captera non seulement la voix du locuteur proche, mais également le bruit environnant et, surtout, l'écho acoustique, c'est-à-dire la réverbération du son reproduit par le haut-parleur - et ceci à un niveau d'autant plus élevé que micro et haut-parleur sont proches et que la puissance acoustique restituée par le haut-parleur est élevée. Tel est typiquement le cas des systèmes embarqués dans un véhicule automobile, où le niveau sonore du haut-parleur est relativement élevé pour couvrir les bruits environnants.

En outre, la distance importante entre microphone et locuteur entraîne un niveau relatif de bruit élevé qui rend difficile l'extraction du signal utile, noyé dans l'écho et dans le bruit. De plus, ce bruit présente des caractéristiques spectrales non stationnaires, c'est-à-dire qui évoluent de manière imprévisible en fonction des conditions de conduite : passage sur des chaussées déformées ou pavées, autoradio en fonctionnement, etc., rendant encore plus difficile la mise au point d'algorithmes appropriés de traitement du signal.

De plus, nombre de ces dispositifs sont réalisés sous la forme d'appareils autonomes, amovibles, comprenant dans un même boîtier à la fois le microphone et le haut-parleur ainsi que les boutons de commande : la proximité (quelques centimètres) entre haut-parleur et microphone entraîne alors un niveau d'écho acoustique considérable, typiquement de l'ordre de vingt fois plus élevé que le signal de parole produit par le locuteur proche.

L'élimination de cet écho acoustique est particulièrement délicate, notamment dans les environnement très bruités, typiques des véhicules automobiles, où le bruit ambiant vient se surajouter aux signaux de parole et d'écho captés par le microphone.

Les dispositifs connus les plus performants mettent en oeuvre dans une telle situation : (i) un étage d'annulation d'écho, (ii) un étage de suppression d'écho et (iii) un étage de réduction de bruit.

L'étage dit d"'annulation d'écho" (*echo cancellation*) modélise une transformation linéaire entre le signal du locuteur distant (c'est-à-dire le signal destiné à être reproduit par le haut-parleur) et l'écho enregistré par le microphone, de manière à définir dynamiquement un filtre adaptatif, appliqué au signal du locuteur distant. Le résultat de ce filtrage est alors soustrait du signal recueilli par le microphone, ce qui a pour effet d'annuler la majeure partie de l'écho acoustique.

L'étage dit de "suppression d'écho" (*echo suppression*) a pour rôle de supprimer l'écho résiduel présent après traitement par l'étage d'annulation d'écho, en atténuant cet écho résiduel jusqu'au niveau du bruit de fond. Alors que l'annulation d'écho est mise en oeuvre essentiellement par un étage soustracteur, la suppression d'écho opère par un contrôle du gain, qui agira également sur le signal utile capté par le microphone (signal de parole du locuteur proche).

Enfin, l'étage de réduction de bruit (*noise reduction*) vise à réduire le bruit de fond capté par le microphone tout en préservant la voix du locuteur proche. Cette réduction de bruit est avantageusement opérée de façon dynamique et adaptative, en discriminant les périodes de silence de la conversation pour y identifier le bruit, puis en opérant un débruitage sélectif avec une atténuation adaptée.

Les JP-A-60 102052 et WO-A-96/26592 décrivent de tels circuits destinés à réduire l'incidence de l'écho acoustique perturbateur.

Toutefois, ces dispositifs ne donnent pas complètement satisfaction, en particulier dans le cas des appareils où la distance entre haut-parleur et microphone est très faible en comparaison de la distance entre locuteur proche et microphone : de ce fait, lorsque le locuteur distant parle, sa parole est reproduite par le haut-parleur et elle est captée en retour par le microphone, avec typiquement un niveau d'écho pouvant atteindre vingt fois celui du niveau moyen de la parole du locuteur proche.

D'autre part, en raison notamment de la mobilité des téléphones portables actuels, il arrive très souvent que le locuteur distant se trouve dans un environnement relativement bruité (rue, bureau, restaurant, train, etc.), avec un niveau de bruit pouvant atteindre de 1/10^{e} du niveau de sa parole. Ce signal de bruit va lui-même être reproduit par le haut-parleur du dispositif et participer à l'écho acoustique. De ce fait, le niveau de ce bruit lointain dans l'écho sera du même ordre que celui de la parole du locuteur proche, voire plus élevé.

Par voie de conséquence, même après d'annulation d'écho, l'écho résiduel provenant de ce bruit lointain (bruit capté côté locuteur distant) ne sera plus négligeable et l'étage de suppression d'écho introduira alors une atténuation importante du signal de parole du locuteur proche, transmis au locuteur distant.

On notera que, contrairement à la voix, le bruit est présent en permanence côté locuteur distant (c'est-à-dire même quand celui-ci ne parle pas), ce qui introduit une atténuation quasi-permanente du signal de parole transmis du locuteur proche au locuteur distant. Le résultat n'est améliorable que lorsque le locuteur distant reste assez longtemps silencieux pour que l'étage d'annulation d'écho puisse modéliser une transformation linéaire du signal de bruit environnant le locuteur distant.

Par ailleurs, l'étage d'annulation d'écho, qui est basé sur un filtre linéaire, ne modélise pas les phénomènes non linéaires qui pourraient intervenir dans la chaîne de transmission, notamment au niveau de l'amplificateur et du haut-parleur, ni le bruit de fond électrique au niveau des circuits de conversion analogique/numérique. Or il s'agit là de phénomènes non négligeables dans le cas de produits grand public, à bas coût et à encombrement réduit.

Ces non-linéarités engendrent une instabilité dans l'algorithme d'annulation d'écho, qui doit chercher à se réadapter dans un temps très court.

Les composantes résultant de ces non-linéarités ne peuvent pas être atténuées par l'annulation d'écho, puisqu'elles ne sont pas modélisées. Elles ne peuvent être réduites que par l'étage de suppression d'écho, ce qui détériore le comportement du dispositif en double parole, du fait de l'atténuation, dans la voix du locuteur proche, de signaux qui ne sont pas de l'écho.

La présente invention a pour objet de résoudre ces diverses difficultés et limitations, grâce à un dispositif pourvu d'un circuit de traitement numérique procurant une réduction plus performante de l'écho acoustique, notamment en présence de phénomènes non-linéaires et en présence, côté locuteur distant, de bruit susceptible d'affecter l'annulation d'écho notamment en situation de double parole.

Le dispositif de l'invention est du type connu comportant : un circuit de recueil de signaux acoustiques, comportant un microphone et des moyens convertisseurs analogique-numérique ; un circuit de restitution de signaux audio, comportant des moyens convertisseurs numérique-analogique, un amplificateur et un haut-parleur ; un circuit d'interfaçage à un réseau téléphonique, notamment un circuit d'interfaçage sans fil à un téléphone portable ; et un circuit de traitement numérique des signaux audio captés par le microphone pour application en entrée des moyens d'interfaçage, et de traitement des signaux audio reçus en sortie des moyens d'interfaçage pour restitution par le haut-parleur.

Le circuit de traitement numérique des signaux audio comporte des moyens de réduction de l'écho acoustique résultant de l'interaction du haut-parleur avec le microphone, qui comportent eux-mêmes : un étage d'annulation d'écho, comprenant un filtre linéaire adaptatif apte à soustraire du signal capté par le microphone un signal de référence dérivé du signal reçu en sortie des moyens d'interfaçage pour restitution par le haut-parleur ; un étage de suppression de l'écho résiduel présent en sortie de l'étage d'annulation d'écho, comprenant des moyens de contrôle de gain ; et un étage de réduction sélective du bruit de fond présent dans le signal reçu en sortie de l'étage de suppression d'écho.

De façon caractéristique de l'invention, le dispositif comprend en outre un étage de filtrage et de numérisation, recevant en entrée le signal appliqué par l'amplificateur au haut-parleur, et délivrant en sortie un signal correspondant filtré et numérisé, appliqué comme signal de référence à l'étage d'annulation d'écho.

De préférence, l'étage de réduction sélective du bruit de fond présent dans le signal reçu en sortie de l'étage de suppression d'écho comprend des moyens d'analyse de cohérence temporelle du signal, aptes à déterminer une probabilité de présence/absence de parole a *priori* à partir des niveaux d'énergie respectifs dans le domaine spectral, et à utiliser cette probabilité pour estimer un spectre de bruit et dériver une estimée débruitée du signal reçu.

Très avantageusement, le dispositif comporte en outre un étage de réduction sélective du bruit de fond présent en amont dans le signal reçu en sortie des moyens d'interfaçage pour application au circuit de restitution de signaux audio, cet étage étant de préférence du même type que celui visant à réduire le bruit de fond présent dans le signal reçu en sortie de l'étage de suppression d'écho.

Selon diverses formes de réalisation préférentielles :
- le filtre linéaire adaptatif de l'étage d'annulation d'écho comprend des moyens de mise en oeuvre d'un algorithme prédictif de type APA ;
- les moyens de contrôle de gain de l'étage de suppression de l'écho résiduel sont des moyens sélectifs de contrôle de gain opérant de façon différenciée en fonction des fréquences du signal reçu ;
- l'étage de filtrage et de numérisation comprend des moyens de filtrage passe-bas et d'adaptation de niveau ;
- les circuits du dispositif sont incorporés dans un boîtier commun portant le haut-parleur et le microphone disposés à proximité l'un de l'autre.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La figure 1 est un schéma par blocs montrant les différents étages impliqués dans le traitement du signal d'un dispositif connu.
La figure 2 est homologue de la figure 1, pour le dispositif de la présente invention.

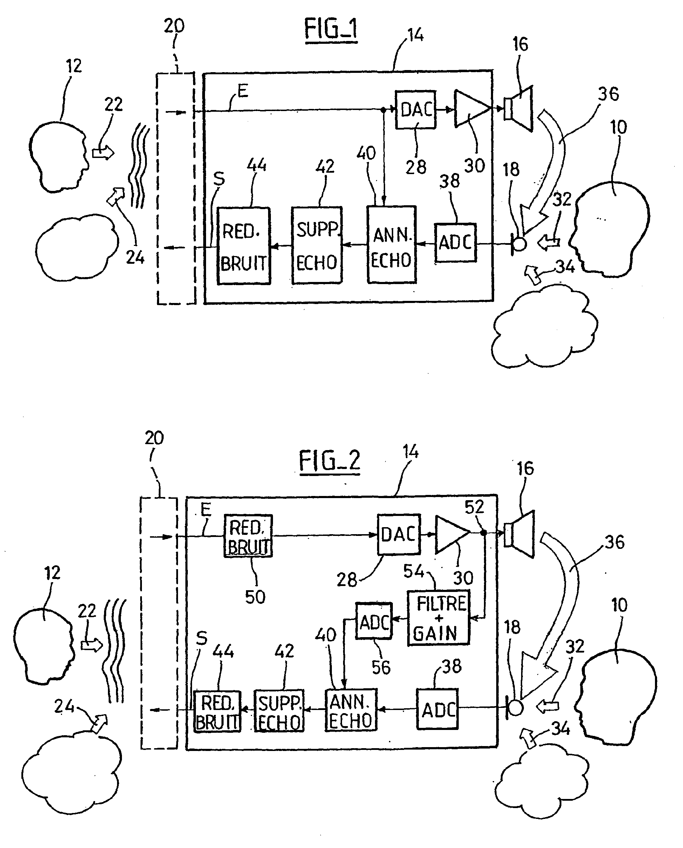

En référence à la figure 1, on va toute d'abord décrire la structure d'un dispositif connu comprenant des moyens d'annulation d'écho, de réduction d'écho et de réduction du bruit.

Le dispositif "mains-libres" est destiné à supporter une conversation téléphonique entre deux personnes, à savoir un locuteur proche 10 et un locuteur distant 12. Le locuteur proche 10 est celui qui se trouve à proximité du dispositif "mains-libres" 14. Le locuteur distant 12 est celui avec lequel le locuteur proche est en conversation téléphonique.

Le dispositif 14 est typiquement un dispositif installé dans un véhicule automobile, à demeure ou de manière amovible. Il possède un haut-parleur 16 destiné à reproduire la parole du locuteur distant, et un microphone 18 destiné à capter la parole du locuteur proche 10. Le dispositif comporte également des moyens d'interfaçage, schématisés en 20, pour la transmission bidirectionnelle des signaux sur un réseau téléphonique, par exemple (mais de façon non limitative) une interface sans fil de type *Bluetooth* (marque déposée du Bluetooth SIG, Inc) ou autre permettant de coupler le dispositif 14 au téléphone cellulaire portable du locuteur proche, par lequel ce dernier est lui-même en communication radiotéléphonique avec le locuteur distant.

Le signal capté du côté du locuteur distant 12 inclut en fait non seulement la parole 22 du locuteur mais également le bruit environnant 24, les deux signaux étant mêlés dans le signal transmis au locuteur proche, signal reçu sur l'entrée E du dispositif 14. Ce signal incident est appliqué à un convertisseur numérique/analogique 28, puis en entrée d'un amplificateur audio 30 qui reproduit le signal sur le haut-parleur 16.

Le microphone 18, quant à lui, va capter un signal acoustique qui sera une combinaison (i) de la parole 32 du locuteur proche 10, (ii) du bruit ambiant 34 régnant dans l'environnement de ce dernier (par exemple dans l'habitacle du véhicule automobile) et (iii) du signal 36 reproduit par le haut-parleur 16.

Le signal 36 est un signal d'écho indésirable du point de vue du microphone 18. Comme on l'a indiqué plus haut, compte tenu des niveaux de fonctionnement de l'amplificateur 30, et du couplage important tenant à la proximité entre haut-parleur 16 et microphone 18, lorsque le locuteur distant 12 parle, le niveau du signal 36 peut atteindre vingt fois celui du signal de parole 32 du locuteur proche 10.

D'autre part, le niveau de bruit dans ce signal d'écho 36 (qui mêle la parole 22 du locuteur distant 12 et le bruit 24 de l'environnement de ce dernier) peut être important, car il arrive fréquemment que le locuteur distant se trouve lui-même dans un environnement bruyant. Le niveau de ce bruit 24 peut fréquemment atteindre de l'ordre de 1/10ème du signal de parole 22, de sorte que le niveau de bruit dans l'écho 36 peut être du même ordre que le signal du niveau de parole 32 du locuteur proche 10, voire plus élevé (en faisant au surplus abstraction du bruit 34 environnant le locuteur proche 10).

Dans les circuits actuels les plus performants, la réduction de l'écho acoustique est opérée, après numérisation du signal capté par le microphone 18 dans un étage de conversion analogique/numérique 38, par trois étages successifs : (i) annulation d'écho 40, (ii) suppression d'écho 42 et (iii) réduction de bruit 44.

L'étage d'annulation d'écho 40 n'a, essentiellement, pas d'effet sur la parole du locuteur proche 10. L'annulation d'écho consiste à définir de façon dynamique un filtre de compensation recevant en entrée le signal provenant du locuteur distant (signal sur l'entrée E du dispositif) de manière à soustraire du signal capté par le microphone 18 un signal adapté représentatif du signal reçu, pour donner en sortie de l'étage 40 un signal débarrassé de l'écho parasite.

Le filtre linéaire peut être caractérisé au moyen d'un algorithme de suppression d'écho tel qu'un algorithme de type APA (*Affin Projection Algorithm*)*,* ou de type LMS (*Least Mean Squares*) ou NLMS (*Normalized LMS*)*.* Un tel algorithme adaptatif perfectionné de type APA est par exemple décrit dans le FR-A-2 792 146 (Parrot SA).

L'annulation d'écho opérée par l'étage 40 présente l'avantage de ne pas modifier les signaux captés par le microphone 18 qui ne soient pas de l'écho ; la voix du locuteur proche est donc intacte après l'étage d'annulation d'écho 40.

Toutefois, pour plusieurs raisons (identification du filtre imparfaite, modélisation linéaire approximative, ...) il est fréquent que de l'écho reste audible après l'étage d'annulation d'écho 40.

L'étage de suppression d'écho 42 a pour objet de supprimer cet écho résiduel, en atténuant le signal d'écho jusqu'au niveau du bruit de fond.

Cet étage suppresseur d'écho est généralement constitué d'un étage à commande automatique de gain opérant soit de façon uniforme sur toutes les fréquences, soit de façon sélective en fonction des différentes bandes de fréquence.

Pour des niveaux raisonnables d'écho résiduel (cas le plus fréquent), le comportement en double parole est peu affecté, car il est relativement rare que la parole du locuteur distant et l'écho soient exactement synchronisés, c'est-à-dire que les deux signaux présentent des niveaux d'énergie comparables au même moment. L'atténuation de la parole du locuteur proche restera ainsi relativement modérée.

Enfin, l'étage de réduction de bruit 44 a pour rôle de réduire le bruit de fond 34 capté par le microphone, tout en préservant la parole 32 du locuteur proche. Cet étage peut notamment mettre en oeuvre des techniques telles que celles décrites par :
[1] Y. Ephraim et D. Malah, Speech Enhancement using a Minimum Mean-Square Error Short-Time Spectral Amplitude Estimator, IEEE Transactions on Acoustics, Speech, and Signal Processing, Vol. ASSP-32, No 6, pp. 1109-1121, Dec. 1984,
[2] Y. Ephraim et D. Malah, Speech Enhancement using a Minimum Mean-Square Error Log-Spectral Amplitude Estimator, IEEE Transactions on Acoustics, Speech, and Signal Processing, Vol. ASSP-33, No 2, pp. 443-445, April 1985, et
[3] 1. Cohen et B. Berdugo, Speech Enhancement for Non-Stationary Noise Environments, Signal Processing, Elsevier, Vol. 81, pp. 2403-2418, 2001.

Ces techniques de réduction de bruit opèrent par discrimination entre les périodes de présence et d'absence de la parole du locuteur proche. Pendant les périodes identifiées comme des silences, le bruit capté est analysé dans ses différentes composantes fréquentielles, de manière à déterminer l'énergie des composantes fréquentielles les plus bruitées et appliquer ensuite au signal bruité un gain faible, tout en laissant intactes les composant peu ou pas bruitées.

Le signal ainsi traité est délivré sur la sortie S, pour transmission au locuteur distant.

L'invention propose de modifier, de la manière illustrée figure 2, la structure du dispositif connu que l'on vient de décrite.

Selon un premier aspect de l'invention, un traitement de débruitage préalable est appliqué en amont au signal provenant du locuteur distant, avant amplification et avant utilisation de ce signal comme référence pour l'étage d'annulation d'écho.

Ce débruitage est opéré par un étage 50 disposé entre l'entrée E du circuit 14 et le convertisseur 28.

Le but de ce débruitage est double :
- réduire le bruit de fond présent dans l'écho, pour améliorer le comportement de l'étage d'annulation d'écho : le bruit de fond dans l'écho étant réduit, l'énergie restituée par le haut-parleur sera moindre, ce qui contribuera d'autant moins à créer un écho résiduel permanent qui tendrait à atténuer le niveau du signal de parole du locuteur proche.
- améliorer la qualité d'écoute pour le locuteur proche, le signal provenant du locuteur distant étant rendu plus intelligible au locuteur proche grâce au débruitage du signal restitué.

L'étage additionnel de réduction du bruit 50 en amont peut utiliser un algorithme comparable à celui de l'étage de réduction de bruit 44 en aval décrit plus haut, c'est-à-dire mettant en oeuvre les mécanismes proposés par Ephraim et Malah dans les références [1] et [2] précitées. Dans ces techniques, le traitement de débruitage proprement dit est réalisé dans le domaine fréquentiel, le passage du domaine temporel au domaine fréquentiel, et du domaine fréquentiel au domaine temporel, étant réalisé au moyen de transformées de Fourier rapides avec fenêtrage et recouvrement. Le débruitage met en oeuvre un module d'estimation de bruit et un module de calcul de gain pour chaque bande de fréquence, les valeurs de gain étant basées sur des modèles statistiques de la parole et du bruit et sur l'estimation de paramètres de ces modèles.

Selon un second aspect de l'invention, la référence utilisée pour le filtre linéaire de l'étage d'annulation d'écho 40 est modifiée de manière à éliminer les phénomènes non-linéaires.

Pour cela, le dispositif utilise comme référence pour l'étage d'annulation d'écho 40 non plus le signal provenant du locuteur distant, mais un signal prélevé en sortie 52 de l'amplificateur 30, correspondant au signal destiné à être appliqué au haut-parleur 16. Le signal de référence de l'étage d'annulation d'écho 40 étant prélevé à ce niveau, il contient les saturations et autres non-linéarités générées par l'amplificateur, notamment dans le cas d'amplificateurs en classe B, relativement sujets à la distorsion.

Le signal de référence contient également le bruit de fond électrique présent en sortie du convertisseur 28, bruit résultant notamment des blindages imparfaits entre l'entrée numérique et la sortie analogique, comme cela est souvent le cas avec les produits grand public.

Ce signal de référence est mis en forme et adapté par un étage 54 de filtrage et de gain et un étage 56 convertisseur analogique/numérique. L'étage 54 comprend un filtre passe-bas analogique et applique un gain inférieur à l'unité, pour adapter le niveau du signal en sortie de l'amplificateur au niveau de l'entrée du convertisseur 56 ; le filtre passe-bas élimine les fréquences élevées, non audibles, en sortie de l'amplificateur (présentes notamment dans le cas d'amplificateurs en classe B), de manière à ne pas perturber le fonctionnement du convertisseur 56.

Le signal de référence de l'étage d'annulation d'écho ainsi défini est un signal très proche de celui qui sera émis par le haut-parleur 16 et sera donc capté dans l'écho 36 par le microphone 18. Le filtre linéaire de l'étage d'annulation d'écho 40 pourra être ainsi estimé avec beaucoup plus de précision, car le filtre adaptatif sera excité par un signal de référence contenant déjà la majeure partie des non-linéarités de la chaîne audio. L'annulation d'écho sera ainsi notablement améliorée, et l'écho résiduel réduit d'autant. L'atténuation introduite ensuite par l'étage de suppression d'écho 42 sera donc moindre, avec pour résultat un meilleur comportement en double parole, la voix du locuteur proche étant corrélativement moins atténuée.

## Revendications

1. Un dispositif "mains libres" utilisable avec un téléphone portable, notamment un dispositif autonome adaptable de manière amovible dans un véhicule automobile, ce dispositif comportant :
- un circuit de recueil de signaux acoustiques, comportant un microphone (18) et des moyens (38) convertisseurs analogique-numérique,
- un circuit de restitution de signaux audio, comportant des moyens (28) convertisseurs numérique-analogique, un amplificateur (30) et un haut-parleur (16),
- un circuit (20) d'interfaçage à un réseau téléphonique, notamment un circuit d'interfaçage sans fil à un téléphone portable, et
- un circuit de traitement numérique des signaux audio captés par le microphone pour application en entrée des moyens d'interfaçage, et de traitement des signaux audio reçus en sortie des moyens d'interfaçage pour restitution par le haut-parleur,
le circuit de traitement numérique des signaux audio comportant des moyens de réduction de l'écho acoustique résultant de l'interaction du haut-parleur avec le microphone, ces moyens comportant :
- un étage (40) d'annulation d'écho, comprenant un filtre linéaire adaptatif apte à soustraire du signal capté par le microphone un signal de référence dérivé du signal reçu en sortie des moyens d'interfaçage pour restitution par le haut-parleur,
- un étage (42) de suppression de l'écho résiduel présent en sortie de l'étage d'annulation d'écho, comprenant des moyens de contrôle de gain, et
- un étage (44) de réduction sélective du bruit de fond présent dans le signal reçu en sortie de l'étage de suppression d'écho,
dispositif **caractérisé en ce qu'**il comprend en outre :
- un étage (54, 56) de filtrage et de numérisation, recevant en entrée le signal appliqué par l'amplificateur (30) au haut-parleur (16), et délivrant en sortie un signal correspondant filtré et numérisé, appliqué comme signal de référence à l'étage (40) d'annulation d'écho.

2. Le dispositif de la revendication 1, dans lequel l'étage (44) de réduction sélective du bruit de fond présent dans le signal reçu en sortie de l'étage de suppression d'écho comprend des moyens d'analyse de cohérence temporelle du signal, aptes à déterminer une probabilité de présence/absence de parole a *priori* à partir des niveaux d'énergie respectifs dans le domaine spectral, et à utiliser cette probabilité pour estimer un spectre de bruit et dériver une estimée débruitée du signal reçu.

3. Le dispositif de la revendication 1, comprenant en outre :
- un étage (50) de réduction sélective du bruit de fond présent dans le signal reçu en sortie des moyens d'interfaçage pour application au circuit de restitution de signaux audio.

4. Le dispositif de la revendication 2, dans lequel l'étage (50) de réduction du bruit de fond présent en amont dans le signal reçu en sortie des moyens d'interfaçage comprend des moyens d'analyse de cohérence temporelle du signal, aptes à déterminer une probabilité de présence/absence de parole a *priori* à partir des niveaux d'énergie respectifs dans le domaine spectral, et à utiliser cette probabilité pour estimer un spectre de bruit et dériver une estimée débruitée du signal reçu.

5. Le dispositif de la revendication 1, dans lequel le filtre linéaire adaptatif de l'étage (40) d'annulation d'écho comprend des moyens de mise en oeuvre d'un algorithme prédictif de type APA.

6. Le dispositif de la revendication 1, dans lequel les moyens de contrôle de gain de l'étage (42) de suppression de l'écho résiduel sont des moyens sélectifs de contrôle de gain opérant de façon différenciée en fonction des fréquences du signal reçu.

7. Le dispositif de la revendication 1, dans lequel l'étage (54) de filtrage et de numérisation comprend des moyens de filtrage passe-bas et d'adaptation de niveau.

8. Le dispositif de la revendication 1, dans lequel les circuits du dispositif sont incorporés dans un boîtier commun (14) portant le haut-parleur (16) et le microphone (18) disposés à proximité l'un de l'autre.

## Claims

1. "Hands-free" device that can be used with a mobile telephone, notably a standalone device that can be adapted to be removable in a motor vehicle, this device comprising:
- a circuit for collecting acoustic signals, comprising a microphone (18) and analogue-digital converter means (38),
- an audio signal restoration circuit, comprising digital-analogue converter means (28), an amplifier (30) and a loudspeaker (16),
- a telephone network interface circuit (20), notably a circuit for wirelessly interfacing with a mobile telephone, and
- a digital circuit for processing audio signals picked up by the microphone for application as input for the interfacing means, and for processing the audio signals received as output from the interfacing means for restoration by the loudspeaker,
the audio signal digital processing circuit including means for reducing the acoustic echo resulting from the interaction of the loudspeaker with the microphone, these means comprising:
- an echo-cancelling stage (40), comprising an adaptive linear filter that is capable of subtracting from the signal picked up by the microphone a reference signal derived from the signal received as output from the interfacing means for restoration by the loudspeaker,
- a stage (42) for suppressing the residual echo present at the output of the echo-cancelling stage, comprising gain control means, and
- a stage (44) for selectively reducing the background noise present in the signal received as output from the echo-suppression stage,
the device being **characterized in that** it also comprises:
- a filtering and digitization stage (54, 56), receiving as input the signal applied by the amplifier (30) to the loudspeaker (16), and delivering as output a corresponding filtered and digitized signal, applied as reference signal to the echo-cancelling stage (40).

2. Device according to Claim 1, in which the stage (44) for selectively reducing the background noise present in the signal received as output from the echo-suppression stage comprises means for analysing the time coherence of the signal, capable of determining a probability of presence/absence of speech a priori from the respective energy levels in the spectral domain, and of using this probability to estimate a noise spectrum and derive a noise-free estimate of the received signal.

3. Device according to Claim 1, also comprising:
- a stage (50) for selectively reducing the background noise present in the signal received as output from the interfacing means for application to the audio signal restoration circuit.

4. Device according to Claim 2, in which the stage (50) for reducing background noise present upstream in the signal received as output from the interfacing means comprises means for analysing the time coherence of the signal, capable of determining a probability of presence/absence of speech a priori from the respective energy levels in the spectral domain, and of using this probability to estimate a noise spectrum and derive a noise-free estimate of the received signal.

5. Device according to Claim 1, in which the adaptive linear filter of the echo-cancelling stage (40) comprises means for implementing a predictive algorithm of APA type.

6. Device according to Claim 1, in which the gain control means of the residual-echo-suppression stage (42) are selective gain control means working in a differentiated manner according to the frequencies of the received signal.

7. Device according to Claim 1, in which the filtering and digitization stage (54) comprises lowpass filtering and level adaptation means.

8. Device according to Claim 1, in which the circuits of the device are incorporated in a common housing (14) supporting the loudspeaker (16) and the microphone (18) arranged in proximity to one another.

## Patentansprüche

1. "Freisprech"-Vorrichtung, die mit einem Mobiltelephon verwendbar ist, insbesondere selbstständige Vorrichtung, die entnehmbar in einem Kraftfahrzeug anpassbar ist, wobei diese Vorrichtung Folgendes umfasst:
- eine Schallsignal-Empfangsschaltung, die ein Mikrophon (18) und Analog/Digital-Umsetzermittel (38) enthält,
- eine Audiosignal-Wiederherstellungsschaltung, die Digital/Analog-Umsetzermittel (28), einen Verstärker (30) und einen Lautsprecher (16) enthält,
- eine Schnittstellenschaltung (20) zu einem Telephonnetz, insbesondere eine drahtlose Schnittstellenschaltung zu einem Mobiltelephon, und
- eine Schaltung für die digitale Verarbeitung von Audiosignalen, die von dem Mikrophon aufgefangen werden, um diese in die Schnittstellenmittel einzugeben, und für die Verarbeitung von Audiosignalen, die vom Ausgang der Schnittstellenmittel empfangen werden, um sie durch den Lautsprecher wiederherzustellen,
wobei die Schaltung für die digitale Verarbeitung der Audiosignale Mittel für die Reduzierung des Schallechos enthält, das sich aus der Wechselwirkung des Lautsprechers mit dem Mikrophon ergibt, wobei diese Mittel Folgendes umfassen:
- eine Echoannullierungsstufe (40) mit einem adaptiven linearen Filter, das von dem durch das Mikrophon aufgefangenen Signal ein Referenzsignal subtrahieren kann, das von dem am Ausgang der Schnittstellenmittel empfangenen Signal abgeleitet ist, um durch den Lautsprecher wiederhergestellt zu werden,
- eine Restecho-Unterdrückungsstufe (42), die am Ausgang der Echoannullierungsstufe vorhanden ist und Verstärkungssteuermittel enthält, und
- eine Stufe (44) zum selektiven Reduzieren des Grundrauschens, das in dem am Ausgang der Echounterdrückungsstufe empfangenen Signal vorhanden ist,
wobei die Vorrichtung **dadurch gekennzeichnet ist, dass** sie außerdem Folgendes umfasst:
- eine Filterungs- und Digitalisierungsstufe (54, 56), die am Eingang das von dem Verstärker (30) in den Lautsprecher (16) eingegebene Signal empfängt und am Ausgang ein entsprechendes gefiltertes und digitalisiertes Signal ausgibt, das als Referenzsignal in die Echoannullierungsstufe (40) eingegeben wird.

2. Vorrichtung nach Anspruch 1, wobei die Stufe (44) zum selektiven Reduzieren des Grundrauschens, das in dem am Ausgang der Echounterdrückungsstufe empfangenen Signal vorhanden ist, Mittel für die Analyse der zeitlichen Kohärenz des Signals umfasst, die eine a priori-Wahrscheinlichkeit des Vorhandenseins/Fehlens von Sprache anhand der jeweiligen Energieniveaus in dem Spektralbereich bestimmen können und diese Wahrscheinlichkeit verwenden können, um ein Rauschspektrum zu schätzen und eine vom Rauschen befreite Schätzung des empfangenen Signals ableiten können.

3. Vorrichtung nach Anspruch 1, die außerdem Folgendes umfasst:
- eine Stufe (50) zum selektiven Reduzieren des Grundrauschens, das in dem empfangenen Signal am Ausgang der Schnittstellenmittel vorhanden ist, um es in die Audiosignal-Wiederherstellungsschaltung einzugeben.

4. Vorrichtung nach Anspruch 2, wobei die Stufe (50) zum Reduzieren des Grundrauschens, das auf der Eingangsseite in dem am Ausgang der Schnittstellenmittel empfangenen Signal vorhanden ist, Mittel zum Analysieren der zeitlichen Kohärenz des Signals umfasst, die eine a priori-Wahrscheinlichkeit des Vorhandenseins/Fehlens von Sprache anhand der jeweiligen Energieniveaus in dem Spektralbereich bestimmen können und diese Wahrscheinlichkeit verwenden können, um ein Rauschspektrum zu schätzen, und eine vom Rauschen befreite Schätzung des empfangenen Signals ableiten können.

5. Vorrichtung nach Anspruch 1, wobei das adaptive lineare Filter der Echoannullierungsstufe (40) Mittel zum Ausführen eines prädiktiven Algorithmus des APA-Typs umfasst.

6. Vorrichtung nach Anspruch 1, wobei die Verstärkungssteuermittel der Stufe (42) für die Unterdrückung des Restechos selektive Mittel für die Steuerung der Verstärkung sind, die als Funktion der Frequenzen des empfangenen Signals unterschiedlich arbeiten.

7. Vorrichtung nach Anspruch 1, wobei die Filterungsund Digitalisierungsstufe (54) Tiefpassfiltermittel mit Pegelanpassung umfasst.

8. Vorrichtung nach Anspruch 1, wobei die Schaltungen der Vorrichtung in ein gemeinsames Gehäuse (14) eingebaut sind, das den Lautsprecher (16) und das Mikrophon (18) trägt, die nebeneinander angeordnet sind.
